# EUROPÄISCHE PATENTSCHRIFT

(11) **EP 1 393 057 B1**
(45) Veröffentlichungstag und Bekanntmachung des Hinweises auf die Patenterteilung: **02.06.2010**
(21) Anmeldenummer: 02748570.5
(22) Anmeldetag: 06.06.2002
(51) Int. Cl.: G01N 30/16

(54) **VORRICHTUNG ZUM DOSIEREN UND VERDAMPFEN KLEINER MENGEN EINER FLÜSSIGKEIT**
DEVICE FOR DOSING AND EVAPORATING SMALL QUANTITIES OF A LIQUID
DISPOSITIF DE DOSAGE ET DE VAPORISATION DE PETITES QUANTITES D'UN LIQUIDE

(30) Priorität: 06.06.2001 DE 10127353
(43) Veröffentlichungstag der Anmeldung: 03.03.2004
(73) Patentinhaber: SIEMENS AKTIENGESELLSCHAFT, 80333 München (DE)
(72) Erfinder: GELLERT, Udo, 76756 Bellheim (DE); STECKENBORN, Arno, 13589 Berlin (DE)
(86) Internationale Anmeldenummer: PCT/DE2002/002067
(87) Internationale Veröffentlichungsnummer: WO 2002/099413

(56) Entgegenhaltungen:
- EP-A- 1 063 523
- EP-B1- 0 739 533
- US-A- 4 405 344
- US-A- 4 958 529
- US-A- 5 306 412
- US-A- 5 359 196

## Beschreibung

Vorrichtung zum Dosieren und Verdampfen kleiner Mengen einer Flüssigkeit

Die Erfindung betrifft eine Vorrichtung zum Dosieren und Verdampfen kleiner Mengen einer Flüssigkeit mit einem Tropfengenerator, der eine Austrittsöffnung für zu erzeugende Flüssigkeitstropfen aufweist und dazu ausgebildet ist, bei Anregung einen Flüssigkeitstropfen entgegen einer Gasströmung aus einem kalten Bereich in einen beheizbaren Bereich der Vorrichtung zu schießen.

Eine derartige aus der US5306412 bekannte Vorrichtung dient zur Elektrospray-Ionisation. Die von einem gekühlten Tropfengenerator ausgestoßenen Flüssigkeitstropfen werden durch ein elektrisches Feld zwischen dem Tropfengenerator und einer Gegenelektrode zu Flüssigkeitströpfchen dispergiert und entgegen einer Gasströmung zu der eine Kapillare aufweisenden Gegenelektrode bewegt.

Für die Verarbeitung oder Behandlung von Flüssigkeiten, beispielsweise deren Analyse, kann eine zuvorige Dosierung und Verdampfung der Flüssigkeit erforderlich sein. Speziell bei der Prozesschromatographie soll der Dosiervorgang prozesstauglich, d. h. automatisch durchführbar, sein. Die kleinste dosierbare Flüssigkeitsmenge soll deutlich unter 0,1 µl liegen und eine Diskriminierung der verdampften Flüssigkeitsprobe, beispielsweise in Form von lokalen Konzentrationsunterschieden unterschiedlicher Verdampfungsbestandteile im Dampf, ausgeschlossen sein. So führt z. B. einfaches Eintropfen der Flüssigkeit in einen beheizten Verdampfungsraum zu einer ungleichmäßigen Verdampfung, weil jeder einzelne Tropfen in einer durch Tropfengröße und äußere Umstände bestimmten Zeit fraktioniert verdampft; dabei verdampfen Inhaltsstoffe mit niedrigem Siedepunkt zuerst und Inhaltsstoffe mit hohem Siedepunkt zuletzt.

Gemäß der Erfindung wird die Aufgabe durch eine Vorrichtung nach Anspruch 1 gelöst.

Mit dem die Flüssigkeit in Tropfen mit hoher Geschwindigkeit verschießenden Tropfengenerator lassen sich kleinste Tröpfchen mit einem Volumen von beispielsweise 50 pl erzeugen, so dass über die Anzahl der zu erzeugenden Tropfen auch kleinste Flüssigkeitsmengen genau dosiert werden können. Die Dosierung erfolgt durch entsprechend häufige Anregung des Tropfengenerators und ist somit einfach automatisierbar. Die in den beheizbaren Bereich geschossenen Tropfen verdampfen dort gleichmäßig, wobei es wegen der sehr geringen Tropfengröße und der ungesplitteten Betriebsweise zu keiner Diskriminierung der Flüssigkeitsprobe kommt. Der zwischen dem Tropfengenerator und dem beheizbaren Bereich liegende kalte Bereich mit der gegen den Tropfenausstoß fließenden Gasströmung bewirkt eine pneumatische Trennung der unverdampften und der verdampften Flüssigkeit, so dass es weder zu einer vorzeitigen und damit ungleichmäßigen Verdampfung der Tröpfchen kommt noch dass in den Pausen des Tropfenausstoßes Inhaltsstoffe der Flüssigkeit an der Austrittsöffnung des Tropfengenerators in Richtung des beheizbaren Bereichs diffundieren.

In diesem Zusammenhang weist der kalte Bereich einen von der Austrittsöffnung des Tropfengenerators entfernteren Gaseinlass und einen unmittelbar vor der Austrittsöffnung liegenden und nach unten offenen Gasauslass auf. Flüssigkeit, die unbeabsichtigt aus der Austrittsöffnung des Tropfengenerators quillt, wird dann mittels der Gasströmung durch den Gasauslass entsorgt.

Vorteilhafterweise teilt sich das durch den Gaseinlass in den kalten Bereich eingeleitete Gas in die erwähnte Gasströmung und eine weitere Gasströmung zu dem beheizbaren Bereich hin und durch diesen hindurch auf, so dass die verdampfte Flüssigkeit von der weiteren Gasströmung zur Weiterverarbeitung oder -behandlung, beispielsweise in das Trennsystem eines Gaschromatographen, transportiert wird.

Um eine Erwärmung des Tropfengenerators und des kalten Bereichs zu verhindern, wird der beheizbare Bereich lediglich zum Verdampfen der von dem Tropfengenerator abgeschossenen Tropfen aufgeheizt, so dass er sich anschließend wieder abkühlen kann. Gegebenenfalls ist auch noch eine aktive Abkühlung denkbar.

Der Tropfengenerator weist bevorzugt einen durch einen elektromechanischen Wandler, insbesondere einen Piezowandler, veränderbaren Verdrängungsraum mit Austrittsöffnung auf.

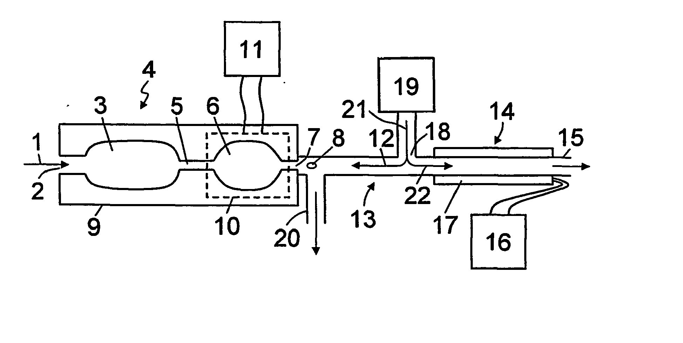

Zur weiteren Erläuterung der Erfindung wird im Folgenden auf die Zeichnung Bezug genommen, die in schematischer Darstellung ein Ausführungsbeispiel der erfindungsgemäßen Vorrichtung zeigt.

Eine aus einem technischen Prozess entnommene und z. B. gaschromatographisch zu analysierende Flüssigkeit 1 gelangt durch eine Eintrittsöffnung 2 in einen Vorratsraum 3 eines Tropfengenerators 4. Der Vorratsraum 3 ist über eine Flüssigkeitspassage 5 mit einem Verdrängungsraum 6 verbunden, der eine Austrittsöffnung 7 für zu erzeugende Flüssigkeitstropfen 8 aufweist. Die flüssigkeitsführenden Teile 2, 3, 5, 6 und 7 des Tropfengenerators 4 sind durch mikromechanische Bearbeitung in einem Siliziumkörper 9 ausgebildet, der auf einer Seite einen elektromechanischen Wandler 10, hier einen Piezowandler, trägt, bei dessen Ansteuerung durch eine Steuereinrichtung 11 der Siliziumkörper 9 gebogen und dabei das Volumen des Verdrängungsraums 6 verändert, hier reduziert, wird. Der Strömungswiderstand der Flüssigkeitspassage 5 ist größer als der der Austrittsöffnung 7, so dass es zu dem gewünschten Ausstoß des Flüssigkeitstropfens 8 aus der Austrittsöffnung 7 kommt. Die Tropfengröße beträgt etwa 50 pl, so dass über die Anzahl der erzeugten Tropfen 8 auch kleinste Flüssigkeitsmengen genau dosiert werden können.

Der Tropfengenerator 4 verschießt den Tropfen 8 mit hoher Geschwindigkeit (ca. 10 m/s) entgegen einer Gasströmung 12 durch einen kalten Bereich 13 in einen beheizbaren Bereich 14, wo der Tropfen 8 verdampft wird. Der beheizbare Bereich 14 wird dabei lediglich zum Verdampfen der jeweils abgeschossenen Tropfenfolge aufgeheizt so dass er sich anschließend wieder abkühlen kann. Dadurch wird verhindert, dass sich der kalte Bereich 13 erwärmt. Die Bereiche 13 und 14 sind hier von dem Inneren eines Kapillarrohres 15 gebildet, welches im beheizbaren Bereich 14 eine durch eine Steuereinheit 16 steuerbare, im einfachsten Fall ein- und abschaltbare, massearme Heizeinrichtung 17 trägt. Zur Erzeugung der Gasströmung 12 weist der kalte Bereich 13 einen von der Austrittsöffnung 7 des Tropfengenerators 4 entfernteren Gaseinlass 18 mit einer daran angeschlossenen Gasquelle 19 und einen unmittelbar vor der Austrittsöffnung 7 liegenden und nach unten offenen Gasauslass 20 auf. Flüssigkeit, die unbeabsichtigt aus der Austrittsöffnung 7 des Tropfengenerators 4 quillt, wird mittels der Gasströmung 12 durch den Gasauslass 20 entsorgt. Außerdem verhindert die Gasströmung 12, dass Inhaltsstoffe der an der Austrittsöffnung 7 des Tropfengenerators 4 anstehenden Flüssigkeit 1 in Richtung des beheizbaren Bereichs 14 diffundieren. Das aus der Gasquelle 19 durch den Gaseinlass 18 in den kalten Bereich eingeleitete Gas 21 teilt sich in die erwähnte Gasströmung 12 und eine weitere Gasströmung 22 zu dem beheizbaren Bereich 14 hin und durch diesen hindurch auf, so dass die dort verdampfte Flüssigkeit von der weiteren Gasströmung 22 in das hier nicht gezeigte Trennsystem (Trennsäule) des Gaschromatographen transportiert wird. Der Durchmesser des Kapillarrohres 15 entspricht dem der Trennsäule.

Damit die Flüssigkeit 1 aus dem technischen Prozess in den Vorratsraum 3 und den Verdrängungsraum 6 gelangt, ist der Druck an der Eintrittsöffnung 2 des Tropfengenerators 4 geringfügig größer als an der Austrittsöffnung 7. Zusätzlich kann die Förderung der Flüssigkeit 1 dadurch unterstützt werden, dass der Vorratsraum 3 bei der jeder Biegung des Siliziumkörpers 9 sein Volumen ändert und dabei als Pumpe wirkt.

## Patentansprüche

1. Vorrichtung zum Dosieren und Verdampfen kleiner Mengen einer Flüssigkeit (1) mit einem Tropfengenerator (4), der eine Austrittsöffnung (7) für zu erzeugende Flüssigkeitstropfen (8) aufweist und dazu ausgebildet ist, bei Anregung einen Flüssigkeitstropfen (8) entgegen einer Gasströmung (12) aus einem kalten Bereich (13) in einen beheizbaren Bereich (14) der Vorrichtung zu schießen, **dadurch gekennzeichnet, dass** die Bereiche (13, 14) von dem Inneren eines Kapillarrohres (15) gebildet sind, welches in dem beheizbaren Bereich (14) eine Heizeinrichtung (17) trägt, und dass zur Erzeugung der Gasströmung (12) der kalte Bereich (13) einen von der Austrittsöffnung (7) des Tropfengenerators (4) entfernteren Gaseinlass (18) und einen unmittelbar vor der Austrittsöffnung (7) liegenden und nach unten offenen Gasauslass (20) aufweist.

2. Vorrichtung nach Anspruch 1, **dadurch gekennzeichnet, dass** durch den Gaseinlass (18) in den kalten Bereich (13) eingeleitetes Gas (21) sich in die Gasströmung (12) und ein weitere Gasströmung (22) zu dem beheizbaren Bereich (14) hin und durch diesen hindurch aufteilt.

3. Vorrichtung nach einem der vorangehenden Ansprüche, **dadurch gekennzeichnet, dass** der Tropfengenerator (4) einen durch einen elektromechanischen Wandler (10), insbesondere einen Piezowandler, veränderbaren Verdrängungsraum (6) mit Austrittsöffnung (7) aufweist.

## Claims

1. Device for dosing and evaporating small quantities of a liquid (1) with a drop generator (4) having an outlet opening (7) for drops of liquid (8) to be generated and which is embodied, on excitation, to shoot a drop of liquid (8) against a gas flow (12) from a cold area (13) into a heatable area (14) of the device, **characterized that** the areas (13, 14) are formed by the inside of a capillary tube (15) which bears a heating device (17) in a heatable area (14) and that, for creating the gas flow (12), the cold area (13) has a gas inlet (18) further away from the outlet opening (7) of the drop generator (4) and a gas outlet (20) lying directly in front of the outlet opening (7) and open downwards.

2. Device according to claim 1, **characterized in that** gas (21) introduced through the gas inlet (18) into the cold area (13) is divided up into the gas flow (12) and a further gas flow (22) to the heatable area (14) and a flow through the latter.

3. Device according to one of the previous claims, **characterized in that** the drop generator (4) features a displacement space (6) with outlet opening (7) able to be changed by an electromagnetic converter (10), especially a piezo converter.

## Revendications

1. Dispositif de dosage et d'évaporation de petites quantités d'un liquide ( 1 ), comprenant un générateur ( 4 ) de gouttes, qui a une ouverture ( 7 ) de sortie des gouttes ( 8 ) de liquide à produire et qui est constitué de manière à faire jaillir, sur excitation, une goutte ( 8 ) de liquide en sens inverse d'un courant ( 12 ) gazeux d'une partie ( 13 ) froide à une partie ( 14 ) pouvant être chauffée du dispositif, **caractérisé en ce que** les parties ( 13, 14 ) sont formées par l'intérieur d'un tube ( 15 ) capillaire, qui porte dans la partie ( 14 ) pouvant être chauffée un dispositif ( 17 ) de chauffage et **en ce que**, pour produire le courant ( 12 ) gazeux, la partie ( 13 ) froide a une entrée ( 18 ) de gaz éloignée de l'ouverture ( 7 ) de sortie du générateur ( 4 ) de gouttes et une sortie ( 20 ) de gaz ouverte vers le bas et se trouvant juste avant l'ouverture ( 7 ) de sortie.

2. Dispositif suivant la revendication 1, **caractérisé en ce que** du gaz ( 21 ) introduit dans la partie ( 13 ) froide par l'entrée ( 18 ) pour du gaz est subdivisé en le courant ( 12 ) gazeux et en un autre courant ( 22 ) gazeux allant à la partie ( 14 ) pouvant être chauffée et y passant.

3. Dispositif suivant l'une des revendications précédentes, **caractérisé en ce que** le générateur ( 4 ) de gouttes a un espace ( 6 ) de refoulement, ayant une ouverture ( 7 ) de sortie et pouvant être modifié par un transducteur ( 10 ) électromécanique, notamment par un transducteur piézoélectrique.
